# EUROPEAN PATENT APPLICATION

(11) **EP 4 319 317 A1**
(43) Date of publication of application: **07.02.2024**
(21) Application number: 21932089.2
(22) Date of filing: 23.03.2021
(51) Int. Cl.: H04W 48/16

(54) **SEARCH SPACE MONITORING METHOD, SEARCH SPACE MONITORING APPARATUS AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2021/082468
(87) International publication number: WO 2022/198459

(57) **Abstract**

The present disclosure relates to a search space monitoring method, a search space monitoring apparatus and a storage medium. The search space monitoring method is applied to a terminal. The method comprises: determining the minimum time interval, wherein the minimum time interval is a time interval between the moment when a terminal sends a PRACH resource and the moment when the terminal monitors a random access search space; and on the basis of the minimum time interval, determining a random access search space for monitoring a physical downlink control channel (PDCCH). By means of the present disclosure, the time interval between the moment when a terminal sends a PRACH resource and the moment when the terminal monitors a random access search space is redefined, such that the time interval may include a time delay of the terminal performing switching between an uplink and a downlink.

## Description

### TECHNICAL FIELD

The present disclosure relates to a field of wireless communication technologies, and specifically to a method and an apparatus for monitoring a search space and a storage medium.

### BACKGROUND

In the new generation of communication technology, a terminal may work based on a bandwidth part (BWP). A terminal may not need to monitor the entire bandwidth, instead only needing to perform data transmission and reception on a part of the system bandwidth. In a time division duplexing (TDD) system, since transmission and reception of uplink (LTL) and downlink (DL) data may share the same bandwidth, a DL BWP and a UL BWP are required to have the same center frequency in order to reduce DL transition time and UL transition time.

For a reduced capability (Redcap) terminal, the capability of the Redcap terminal may monitor a DL initial BWP. However, a UL initial BWP may exceed a bandwidth range monitored by the Redcap terminal. On this basis, in the related art, a separate UL initial BWP is configured for the Redcap terminal, or a physical random access channel (PRACH) resource corresponding to a synchronization signal and PBCH block with the best measurement quality is monitored. Therefore, a center frequency of a UL resource monitored by the Redcap terminal is different from that of a DL resource monitored by the Redcap terminal, which causes that the DL transition time and the UL transition time are relatively large and after the terminal sends the PRACH, a gap before monitoring the random access search space cannot include the DL transition time and the UL transition time.

### SUMMARY

In order to overcome the problems existing in the related art, the present disclosure provides a method and an apparatus for monitoring a search space, and a storage medium.

According to a first aspect of the embodiments of the present disclosure, a method for monitoring a search space is provided, performed by a terminal. The method includes: determining a minimum gap, in which the minimum gap is a gap between a resource for sending a physical random access channel (PRACH) and a random access search space monitored; and determining a random access search space for monitoring a physical downlink control channel (PDCCH) based on the minimum gap.

In an implementation, the minimum gap includes a plurality of minimum gaps, and the plurality of minimum gaps include a first minimum gap and a second minimum gap. The first minimum gap corresponds to a first performance condition of the terminal, and the second minimum gap corresponds to a second performance condition of the terminal. A terminal capability corresponding to the first performance condition is greater than a terminal capability corresponding to the second performance condition. The first minimum gap is less than the second minimum gap.

In an implementation, determining the random access search space for monitoring the PDCCH based on the minimum gap includes: in response to the terminal meeting the first performance condition, monitoring a random access search space following the first minimum gap; or in response to the terminal meeting the second performance condition, monitoring a random access search space following the second minimum gap.

In an implementation, the minimum gap includes one minimum gap configured; determining the random access search space for monitoring the PDCCH based on the minimum gap includes: determining a transition time of the terminal; and determining a start moment of the random access search space for monitoring the PDCCH based on a size relationship between the transition time and the minimum gap.

In an implementation, the transition time includes a first transition time and a second transition time. The first transition time corresponds to a first performance condition of the terminal, and the second transition time corresponds to a second performance condition of the terminal. A terminal capability corresponding to the first performance condition is greater than a terminal capability corresponding to the second performance condition. The first transition time is less than the second transition time.

In an implementation, determining the start moment of the random access search space for monitoring the PDCCH based on the size relationship between the transition time and the minimum gap includes: in response to the terminal meeting the first performance condition, determining the start moment of the random access search space for monitoring the PDCCH based on a part of a first random access search space following the minimum gap or a non-first random access search space following the minimum gap, in which the first transition time is greater than the minimum gap.

In an implementation, determining the start moment of the random access search space for monitoring the PDCCH based on the size relationship between the transition time and the minimum gap includes: in response to the terminal meeting the second performance condition, and the second transition time being greater than the minimum gap, determining the start moment of the random access search space for monitoring the PDCCH based on a part of a first random access search space following the minimum gap or a non-first random access search space following the minimum gap, in which the second transition time is greater than the minimum gap.

In an implementation, the method further includes: determining a first random access response search space corresponding to a first random access search space following the minimum gap; and determining a random access response window based on a start moment of a first random access response search space as a reference moment.

In an implementation, the first performance condition or the second performance condition includes at least one of: a terminal type; or center frequencies of an uplink resource and a downlink resource of the terminal.

According to a second aspect of the embodiment of the present disclosure, a method for monitoring a search space is provided, performed by a network device. The method includes: determining a minimum gap, in which the minimum gap is a gap between a resource for sending by a terminal a physical random access channel (PRACH) and a random access search space monitored by the terminal; and determining a random access search space for sending a physical downlink control channel (PDCCH) based on the minimum gap.

In an implementation, the minimum gap includes a plurality of minimum gaps, and the plurality of minimum gaps include a first minimum gap and a second minimum gap. The first minimum gap corresponds to a first performance condition of the terminal, and the second minimum gap corresponds to a second performance condition of the terminal. A terminal capability corresponding to the first performance condition is greater than a terminal capability corresponding to the second performance condition. The first minimum gap is less than the second minimum gap.

In an implementation, determining the random access search space for sending the PDCCH based on the minimum gap includes: in response to the terminal meeting the first performance condition, send the PDCCH based on a random access search space following the first minimum gap; or in response to the terminal meeting the second performance condition, send the PDCCH based on a random access search space following the second minimum gap.

In an implementation, the minimum gap includes one minimum gap. Determining the random access search space for sending the PDCCH based on the minimum gap includes: determining a transition time of the terminal; and determining a start moment of the random access search space for sending the PDCCH based on a size relationship between the transition time and the minimum gap.

In an implementation, the transition time includes a first transition time and a second transition time. The first transition time corresponds to a first performance condition of the terminal, and the second transition time corresponds to a second performance condition of the terminal. A terminal capability corresponding to the first performance condition is greater than a terminal capability corresponding to the second performance condition; and the first transition time is less than the second transition time.

In an implementation, the method further includes: determining a first random access response search space corresponding to a first random access search space following the minimum gap; and determining a random access response window based on a start moment of the first random access response search space as a reference moment.

In an implementation, the first performance condition and the second performance condition include at least one of: a terminal type; or center frequencies of an uplink resource and a downlink resource of the terminal.

According to a third aspect of the embodiments of the present disclosure, an apparatus for monitoring a search space, which includes: a determination module, configured to determine a minimum gap, in which the minimum gap is a gap between a resource for sending a physical random access channel (PRACH) and a random access search space monitored; and a monitoring module, configured to determine the random access search space for monitoring a physical downlink control channel (PDCCH) based on the minimum gap.

In an implementation, the minimum gap includes a plurality of minimum gaps, and the plurality of minimum gaps include a first minimum gap and a second minimum gap. The first minimum gap corresponds to a first performance condition of the terminal, and the second minimum gap corresponds to a second performance condition of the terminal. A terminal capability corresponding to the first performance condition is greater than a terminal capability corresponding to the second performance condition. The first minimum gap is less than the second minimum gap.

In an implementation, the monitoring module is configured to in response to the terminal meeting the first performance condition, monitor a random access search space following the first minimum gap; or in response to the terminal meeting the second performance condition, monitor a random access search space following the second minimum gap.

In an implementation, the minimum gap includes one minimum gap configured; the monitoring module is configured to: determine a transition time of the terminal; and determine a start moment of the random access search space for monitoring the PDCCH based on a size relationship between the transition time and the minimum gap.

In an implementation, the transition time includes a first transition time and a second transition time. The first transition time corresponds to a first performance condition of the terminal, and the second transition time corresponds to a second performance condition of the terminal. A terminal capability corresponding to the first performance condition is greater than a terminal capability corresponding to the second performance condition. The first transition time is less than the second transition time.

In an implementation, the monitoring module is configured to in response to the terminal meeting the first performance condition, determine the start moment of the random access search space for monitoring the PDCCH based on a part of a first random access search space following the minimum gap or a non-first random access search space following the minimum gap, in which the first transition time is greater than the minimum gap.

In an implementation, the monitoring module is configured to in response to the terminal meeting the second performance condition, and the second transition time being greater than the minimum gap, determine the start moment of the random access search space for monitoring the PDCCH based on a part of a first random access search space following the minimum gap or a non-first random access search space following the minimum gap, in which the second transition time is greater than the minimum gap.

In an implementation, the determination module is also configured to: determine a first random access response search space corresponding to a first random access search space following the minimum gap; and determine a random access response window based on a start moment of the first random access response search space as a reference moment.

In an implementation, the first performance condition or the second performance condition includes at least one of: a terminal type; or center frequencies of an uplink resource and a downlink resource of the terminal.

According to a fourth aspect of the embodiments of the present disclosure, an apparatus for monitoring a search space is provided, which includes: a determination module, configured to determine a minimum gap, in which the minimum gap is a gap between a resource for sending a physical random access channel (PRACH) and a random access search space monitored; and a sending module, configured to determine the random access search space for sending a physical downlink control channel (PDCCH) based on the minimum gap.

In an implementation, the minimum gap includes a plurality of minimum gaps, and the plurality of minimum gaps include a first minimum gap and a second minimum gap. The first minimum gap corresponds to a first performance condition of a terminal, and the second minimum gap corresponds to a second performance condition of the terminal. A terminal capability corresponding to the first performance condition is greater than a terminal capability corresponding to the second performance condition. The first minimum gap is less than the second minimum interval.

In an implementation, the sending module is configured to in response to the terminal meeting the first performance condition, send the PDCCH based on a random access search space following the first minimum gap; or in response to the terminal meeting the second performance condition, send the PDCCH based on a random access search space following the second minimum gap.

In an implementation, the minimum gap includes one minimum gap. The sending module is configured to determine a transition time of the terminal; and determine a start moment of the random access search space for sending the PDCCH based on a size relationship between the transition time and the minimum gap.

In an implementation, the transition time includes a first transition time and a second transition time. The first transition time corresponds to a first performance condition of the terminal, and the second transition time corresponds to a second performance condition of the terminal. A terminal capability corresponding to the first performance condition is greater than the terminal capability corresponding to the second performance condition. The first transition time is less than the second transition time.

In an implementation, the determination module is also configured to: determine a first random access response search space corresponding to a first random access search space following the minimum gap; and determine a random access response window based on a start moment of the first random access response search space as a reference moment.

In an implementation, the first performance condition and the second performance condition include at least one of: a terminal type; or center frequencies of an uplink resource and a downlink resource of the terminal.

According to a fifth aspect of the embodiments of the present disclosure, a communication device is provided, including a processor and a memory for storing computer programs. When the computer programs are executed by the processor, the communication device is caused to perform the method as described in the first aspect or any implementation of the first aspect.

According to a sixth aspect of the embodiments of the present disclosure, a communication device is provided, including a processor and a memory for storing computer programs. When the computer programs are executed by the processor, the communication device is caused to perform the method for monitoring a search space as described in the second aspect or any implementation of the second aspect.

According to a seventh aspect of the embodiments of the present disclosure, a computer-readable storage medium storing instructions is provided. When the instructions are executed, the method as described in the first aspect or any implementation of the first aspect is implemented.

According to an eighth aspect of the embodiments of the present disclosure, a computer-readable storage medium storing instructions is provided. When the instructions are executed, the method as described in the second aspect or any implementation of the second aspect is implemented.

The technical solution according to the embodiments of the present disclosure may include the following beneficial effects: by configuring different switching gaps for different terminals, or giving up monitoring a part of the random access search space, the present disclosure proposes to define the minimum gap for a terminal to perform downlink transition and uplink transition, so as to ensure that the terminal may monitor the PDCCH containing a random access response.

It should be understood that the foregoing general description and the following detailed description are exemplary and explanatory only, without limiting the present disclosure.

### BRIEF DESCRIPTION OF THE DRAWINGS

The accompanying drawings, which are incorporated in and constitute a part of this specification, illustrate the embodiments consistent with the disclosure and together with the description, serve to explain the principles of the disclosure.
FIG. 1 is an architecture diagram illustrating a communication system with a network device and terminals according to an exemplary embodiment.
FIG. 2 is a schematic diagram illustrating a separate LTL initial BWP configured for a Redcap terminal according to an exemplary embodiment.
FIG. 3 is a schematic diagram illustrating a monitoring part of the UL initial BWP configured for a Redcap terminal according to an exemplary embodiment.
FIG. 4 is a flowchart illustrating a method for monitoring a search space according to an exemplary embodiment.
FIG. 5 is a flowchart illustrating another method for monitoring a search space according to an exemplary embodiment.
FIG. 6 is a flowchart illustrating yet another method for monitoring a search space according to an exemplary embodiment.
FIG. 7 is a flowchart illustrating yet another method for monitoring a search space according to an exemplary embodiment.
FIG. 8 is a flowchart illustrating yet another method for monitoring a search space according to an exemplary embodiment.
FIG. 9 is a flowchart illustrating yet another method for monitoring a search space according to an exemplary embodiment.
FIG. 10 is a flowchart illustrating yet another method for monitoring a search space according to an exemplary embodiment.
FIG. 11 is a flowchart illustrating yet another method for monitoring a search space according to an exemplary embodiment.
FIG. 12 is a flowchart illustrating yet another method for monitoring a search space according to an exemplary embodiment.
FIG. 13 is a flowchart illustrating yet another method for monitoring a search space according to an exemplary embodiment.
FIG. 14 is a flowchart illustrating yet another method for monitoring a search space according to an exemplary embodiment.
FIG. 15 is a flowchart illustrating yet another method for monitoring a search space according to an exemplary embodiment.
FIG. 16 is a block diagram illustrating an apparatus for monitoring a search space according to an exemplary embodiment.
FIG. 17 is a block diagram illustrating another apparatus for monitoring a search space device according to an exemplary embodiment.
FIG. 18 is a block diagram illustrating a device for monitoring a search space according to an exemplary embodiment.
FIG. 19 is a block diagram illustrating another device for monitoring a search space according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the present disclosure. Rather, they are merely examples of the apparatuses and methods consistent with aspects of the disclosure as detailed in the appended claims.

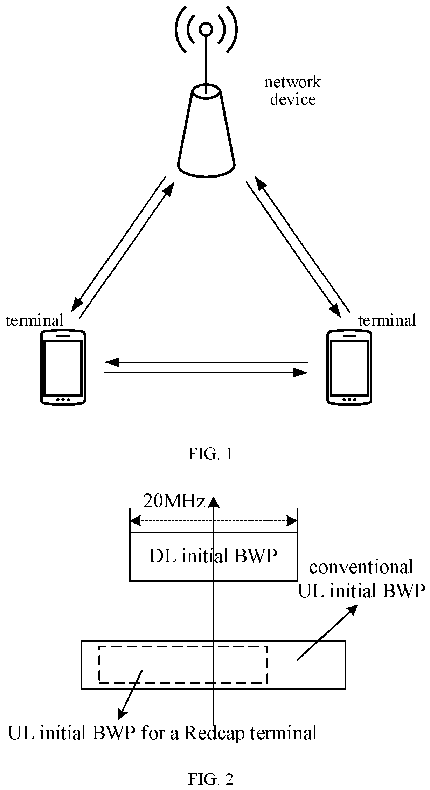

FIG. 1 is an architecture diagram illustrating a communication system with a network device and terminals according to an exemplary embodiment. The communication method according to the present disclosure may be applied to the communication system architecture diagram shown in FIG. 1. As shown in FIG. 1, the network device may send a signaling based on the architecture shown in FIG. 1.

It may be understood that the communication system with a network device and terminals shown in FIG. 1 is only a schematic illustration, and the wireless communication system may also include other network device, such as a core network device, a wireless relay device, and a wireless backhaul device, etc. that are not shown in FIG. 1. The embodiments of the present disclosure do not limit a number of network devices and a number of terminals included in the wireless communication system.

It may be further understood that the wireless communication system in the embodiment of the present disclosure is a network that provides wireless communication functions. The wireless communication system may adopt different communication technologies, such as a code division multiple access (CDMA), a wideband code division multiple access (WCDMA), a time division multiple access (TDMA), a frequency division multiple access (FDMA), an orthogonal frequency-division multiple access (OFDMA), a single carrier FDMA (SC-FDMA), a Carrier Sense Multiple Access with Collision Avoidance. According to the capacity, speed, delay and other factors of different networks, networks may be divided into a 2^{nd} generation (2G) network, a 3G networks, a 4G network or a future evolution network, such as a 5G network. The 5G network may also be called a new wireless network (i.e., New Radio, NR). For convenience of description, the wireless communication network in the disclosure sometimes is simply named as a network.

Furthermore, the network device involved in this disclosure may also be called a wireless access network device. The wireless access network device may be: a base station, an evolved base station (i.e., evolved node B), a home base station, an access point (AP) in a wireless fidelity (WIFI) system, or a wireless relay node, a wireless backhaul node, a transmission point (TP) or a transmission and reception point (TRP), etc. Alternatively, the wireless access network device may also be the gNB in the NR system, or may also be a component or a part of devices that constitutes the base station. When it is a vehicle-to-everything (V2X) communication system, the network device may also be a vehicle-mounted device. It should be understood that in the embodiments of the present disclosure, there are no limitations on the specific technology and specific device form used by the network device.

Furthermore, the terminal involved in this disclosure may also be called a terminal device, a user equipment (UE), a mobile station (MS), a mobile terminal (MT), etc., which is a device that provides voice and/or data connectivity to a user. For example, the terminal may be a handheld device, a vehicle-mounted device, etc. with wireless connectivity capabilities. Currently, some examples of the terminal are: a mobile phone, a pocket personal computer (PPC), a palm computer, a personal digital assistant (PDA), a notebook computer, a tablet computer, a wearable device, or a vehicle-mounted device. In addition, when it is a vehicle-to-everything (V2X) communication system, the terminal device may also be a vehicle-mounted device. It should be understood that the embodiments of the present disclosure do not limit the specific technology and specific device form used by the terminal.

In the new generation of communication technology, a terminal may work based on a bandwidth part (BWP). That is, the terminal does not need to monitor the entire bandwidth, but only needs to perform data transmission and reception on a part of the system bandwidth. In a TDD system, since transmission and reception of uplink (UL) and downlink (DL)data may share the same bandwidth, a DL BWP and a UL BWP are required to have the same center frequency point in order to reduce DL transition time and UL transition time.

For a reduced capability (Redcap) terminal, the capability of the Redcap terminal may monitor a DL initial BWP. However, a UL initial BWP may exceed a bandwidth range monitored by the Redcap terminal. On this basis, there are two solutions proposed in the related art for the Redcap terminal.

In a solution, referring to FIG. 2, it is a schematic diagram illustrating a separate UL initial BWP configured for a Redcap terminal according to an exemplary embodiment. As shown in FIG. 2, a separate UL initial BWP is configured for the Redcap terminal.

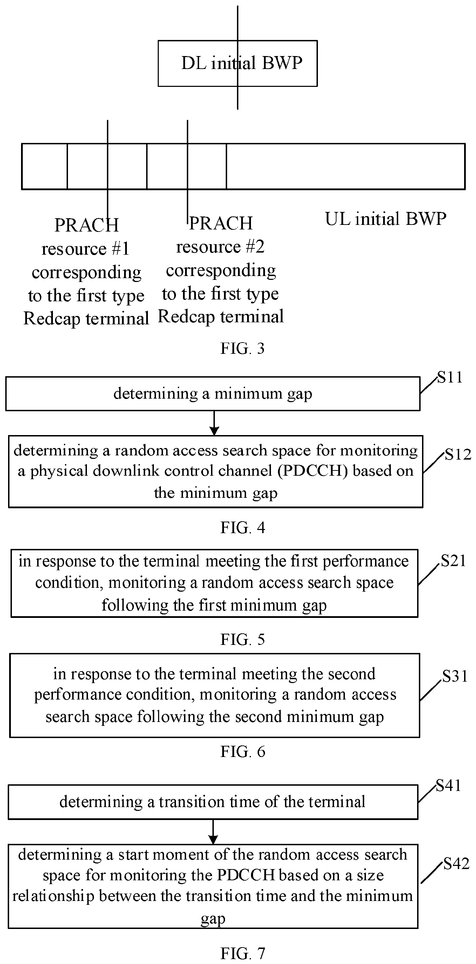

In a solution, referring to FIG. 3, it is a schematic diagram illustrating a monitoring part of the UL initial BWP configured for the Redcap terminal according to an exemplary embodiment. As shown in FIG. 3, it is configured for the Redcap terminal to monitor and measure a PRACH resource corresponding to the SSB with the best measurement quality, for example, PRACH resource #1 corresponding to a first type of Redcap terminal, and PRACH resource #2 corresponding to a second type of Redcap terminal.

Therefore, a center frequency of a UL resource monitored by the Redcap terminal is different from that of a DL resource monitored by the Redcap terminal. In the TDD system of the related art, the UL transition time and the DL transition time of the terminal are defined based on a fact that the center frequency of the UL resource monitored by the terminal is the same as that of the DL resource monitored by the terminal, as shown in Table 1 below.

**Table 1**

| Transition time | FR1 (Ts) | FR2 (Ts) |
|---|---|---|
| *N* _{Tx-Rx} | 25600 | 13792 |
| *N* _{Rx-Tx} | 25600 | 13792 |

It may be understood that each element in Table 1 exists independently, and these elements are exemplarily listed in the same table, but it does not mean that all the elements in the table must exist at the same time as shown in the table. The value of each element does not depend on the value of any other element in Table 1. Therefore, those skilled in the art may understand that the value of each element in Table 1 is an independent embodiment.

When the Redcap terminal uses the method in the above embodiment to monitor the UL BWP and DL BWP, there will be a problem that the center frequency of the UL resource is different from that of the DL resource, which causes that the DL transition time and the UL transition time are relatively large. The values of the DL transition time and the UL transition time are even greater than maximum values of the DL transition time and the UL transition time when the center frequency of the UL resource is the same as that of the DL resource. In some cases, it may increase by about 50us~200us.

After the terminal sends the PRACH, there is a need to monitor a random access search space. In the communication protocol of the related art, a gap between the PRACH and the random access search space is defined, for example, 1 OFDM symbol.

However, if the center frequency of the UL resource for the Redcap terminal is different from that of the DL resource for the Redcap terminal, the defined interval cannot include the UL transition time and the DL transition time for the Redcap terminal.

Based on the above problem, the present disclosure provides a method for monitoring a search space. It is proposed to configure different minimum gaps for different performance conditions of the terminal, or the terminal determines the random access search space for monitoring based on the UL transition time and the DL transition time to avoid uncertainty in terminal behaviors.

FIG. 4 is a flowchart illustrating a method for monitoring a search space according to an exemplary embodiment. As shown in FIG. 4, the method for monitoring a search space is executed by a terminal and includes the following steps.

At S 11, a minimum gap is determined.

In the embodiment of the present disclosure, the minimum gap configuration may include one or more minimum gaps. The minimum gap is a gap between a resource for the terminal to send a PRACH and a random access search space monitored by the terminal.

At S 12, a random access search space for monitoring a PDCCH is determined based on the minimum gap.

In the embodiment of the present disclosure, the terminal determines a minimum gap including UL transition time and DL transition time of the terminal from the one or more minimum gaps. The random access search space is monitored following the determined minimum gap, and the PDCCH is monitored based on the random access search space. A random access response is received based on the monitored PDCCH.

In some embodiments of the present disclosure, the network device may configure a plurality of minimum gaps for the terminal, and the terminal may determine a corresponding minimum gap according to its own performance conditions. The performance conditions of the terminal may include a first performance condition and a second performance condition. The plurality of minimum gaps may include two minimum gaps, i.e., a first minimum gap and a second minimum gap. The first minimum gap and the second minimum gap may be determined based on a communication protocol.

In some embodiments of the present disclosure, the first minimum gap corresponds to the first performance condition of the terminal, and the second minimum gap corresponds to the second performance of the terminal. The terminal capability corresponding to the first performance condition is greater than the terminal capability corresponding to the second performance condition. The first minimum gap is less than the second minimum gap.

FIG. 5 is a flowchart illustrating a method for monitoring a search space according to an exemplary embodiment. As shown in FIG. 5, the method for monitoring a search space is executed by the terminal and includes the following steps.

At S21, in response to the terminal meeting the first performance condition, a random access search space following the first minimum gap is monitored.

In the embodiment of the present disclosure, as described in the above embodiment, the first performance condition of the terminal corresponds to the first minimum gap. If the terminal meets the first performance condition, the random access search space following the first minimum gap is monitored.

As an example, the terminal meeting the first performance condition may be that the center frequency of the UL resource used by the terminal may be the same as that of the DL resource monitored by the terminal. In response to the center frequency of the UL resource used by the terminal being the same as that of the DL resource monitored by the terminal, it is determined to monitor a random access search space following the first minimum gap, and the PDCCH is further received.

As an example, the terminal meeting the first performance condition may be that a terminal type may be a first type of terminal. In response to the terminal being the first type of terminal, it is determined to monitor a random access search space following the first minimum gap, and the PDCCH is further received and monitored. The first type of terminal may be a normal terminal with a relatively high communication capability.

FIG. 6 is a flowchart illustrating a method for monitoring a search space according to an exemplary embodiment. As shown in FIG. 6, the method for monitoring a search space is executed by the terminal and includes the following steps.

At S31, in response to the terminal meeting the second performance condition, the random access search space following the second minimum gap is monitored.

In some embodiments of the present disclosure, as described in the above embodiments, the second performance condition of the terminal corresponds to the second minimum gap. If the terminal meets the second performance condition, the random access search space following the second minimum gap is monitored, and the PDCCH is further received and monitored.

As an example, the terminal meeting the second performance condition may be that the center frequency of the UL resource used by the terminal is different from that of the DL resource monitored by the terminal. In response to the center frequency of the UL resource used by the terminal being different from that of the DL resource monitored by the terminal, it is determined to monitor the first random access search space following the second minimum gap, and the PDCCH is further received.

As an example, the terminal meeting the first performance condition may be that the terminal type may be a first type of terminal. In response to the terminal being the first type of terminal, it is determined to monitor the first random access search space following the second minimum gap, and the PDCCH is further received. The first type of terminal may be a normal terminal with a relatively high communication capability.

In an embodiment of the present disclosure, in response to the minimum gap including a plurality of minimum gaps, for example, the plurality of minimum gaps include a first minimum gap and a second minimum gap, the network device determines to send the PDCCH of scheduling a random access response in the random access search space following the first minimum gap or the second minimum gap.

In some embodiments of the present disclosure, the minimum gap may also include one minimum gap. The minimum gap is a gap between a resource for sending a PRACH by all terminals and the random access search space monitored by the terminals. The minimum gap may be determined based on a communication protocol.

FIG. 7 is a flowchart illustrating a method for monitoring a search space according to an exemplary embodiment. As shown in FIG. 7, the method for monitoring a search space is executed by the terminal and includes the following steps.

At S41, a transition time of the terminal is determined.

In the embodiment of the present disclosure, the terminal determines transition times for the terminal to perform UL and DL according to its own performance conditions. The performance conditions of the terminal include a first performance condition and a second performance condition.

At S42, a start moment of the random access search space for monitoring the PDCCH is determined based on a size relationship between the transition time and the minimum gap.

In the embodiment of the present disclosure, the terminal compares the determined transition time with the minimum gap determined according to the communication protocol. According to a size relationships between the transition times for the terminal to perform LTL and DL and the minimum gap, the start moment of the random access search space for monitoring the PDCCH is determined.

In response to the transition time being greater than the minimum gap, the start moment of the random access search space for monitoring the PDCCH is determined based on the earliest appearing part of the random access search space. Alternatively, in response to the transition time being greater than the minimum gap, the start moment of the random access search space for monitoring the PDCCH is determined based on the next random access search space of the earliest appearing random access search space. In response to the transition time being less than or equal to the minimum gap and after monitoring the minimum gap, the start moment of the random access search space for monitoring the PDCCH is determined based on the earliest appearing random access search space.

In some embodiments of the present disclosure, the transition times for the terminal to perform UL and DL may include a plurality of transition times. The plurality of transition times may include a first transition time and a second transition time.

In some embodiments of the present disclosure, the first transition time corresponds to the first performance condition of the terminal, and the second transition time corresponds to the second performance condition of the terminal. The terminal capability corresponding to the first performance condition is greater than the terminal capability corresponding to the second performance condition. The first transition time is smaller than the second transition time.

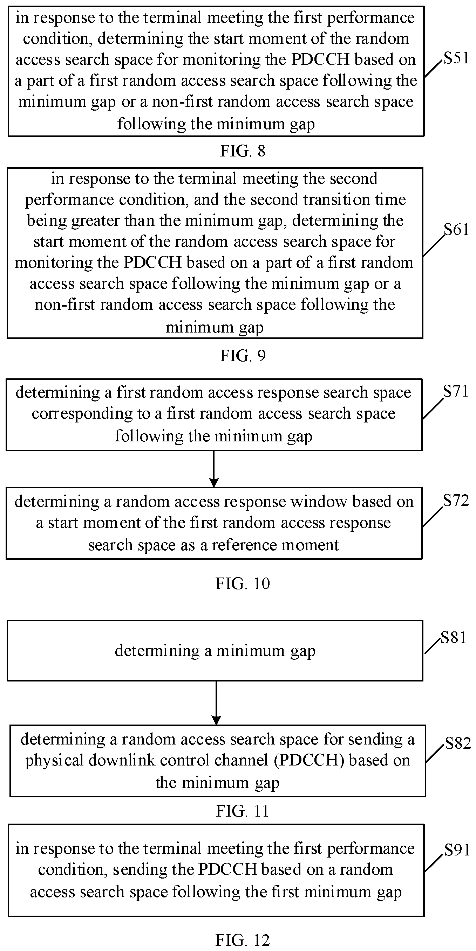

FIG. 8 is a flowchart illustrating a method for monitoring a search space according to an exemplary embodiment. As shown in FIG. 8, the method for monitoring a search space is executed by the terminal and includes the following steps.

At S51, in response to the terminal meeting the first performance condition, the start moment of the random access search space for monitoring the PDCCH is determined based on a part of a first random access search space or a non-first random access search space following the minimum gap.

In the embodiment of the present disclosure, as described in the above embodiment, the first performance condition of the terminal corresponds to the first transition time. In response to the first transition time of the terminal being greater than the minimum gap, the terminal determines the start moment of the random access search space for monitoring the PDCCH based on a part of the first random access search space following the minimum gap. Alternatively, in response to the first transition time of the terminal being greater than the minimum gap, the terminal determines the start moment of the random access search space for monitoring the PDCCH based on the non-first random access search space following the minimum gap. Further, the PDCCH is received in the monitored random access search space, so as to determine a random access response. In other words, in response to the first transition time of the terminal being greater than the minimum gap, it is determined to give up monitoring the earliest random access search space following the minimum gap. Alternatively, in response to the first transition time of the terminal being greater than the minimum gap, it is determined to give up monitoring a part of the earliest random access search space following the minimum gap.

As an example, the first performance condition of the terminal may be that the center frequency of the UL resource used by the terminal is the same as that of the DL resource monitored by the terminal. If the center frequency of the UL resource used by the terminal is the same as that of the DL resource monitored by the terminal, and the first transition time is greater than the minimum gap, the terminal determines the start moment of the random access search space for monitoring the PDCCH based on a part of the first random access search space following the minimum gap. Alternatively, in response to the first transition time of the terminal being greater than the minimum gap, the terminal determines the start moment of the random access search space for monitoring the PDCCH based on the non-first random access search space following the minimum gap. Further, the PDCCH is received to determine the random access response.

As an example, the first performance condition of the terminal may be that the terminal type is a first type of terminal. In response to the terminal being the first type of terminal and the first transition time being greater than the minimum gap, the terminal determines the start moment of the random access search space for monitoring the PDCCH based on a part of the first random access search space following the minimum gap. Alternatively, in response to the first transition time of the terminal being greater than the minimum gap, the terminal determines the start moment of the random access search space for monitoring the PDCCH based on the non-first random access search space following the minimum gap. The PDCCH is received to determine a random access response.

FIG. 9 is a flowchart illustrating a method for monitoring a search space according to an exemplary embodiment. As shown in FIG. 9, the method for monitoring a search space is executed by the terminal and includes the following steps.

At S61, in response to the terminal meeting the second performance condition, a start moment of the random access search space for monitoring the PDCCH is determined based on a part of a first random access search space or a non-first random access search space following the minimum gap.

In the embodiment of the present disclosure, as described in the above embodiment, the second performance condition of the terminal corresponds to the second transition time. In response to the second transition time of the terminal being greater than the minimum gap, the terminal determines the start moment of the random access search space for monitoring the PDCCH based on a part of the first random access search space following the minimum gap. Alternatively, in response to the second transition time of the terminal being greater than the minimum gap, the terminal determines the start moment of the random access search space for monitoring the PDCCH based on the non-first random access search space following the minimum gap. The PDCCH is received in the monitored random access search space to determine a random access response. In other words, in response to the second transition time of the terminal being greater than the minimum gap, it is determined to give up monitoring the earliest random access search space following the minimum gap. Alternatively, in response to the second transition time of the terminal being greater than the minimum gap, it is determined to give up monitoring a part of the earliest random access search space following the minimum gap.

As an example, the second performance condition of the terminal may be that the center frequency of the UL resource used by the terminal is the same as that of the DL resource monitored by the terminal. If the center frequency of the UL resource used by the terminal is the same as that of the DL resource monitored by the terminal, and the second transition time is greater than the minimum gap, the terminal determines the start moment of the random access search space for monitoring the PDCCH based on a part of the first random access search space following the minimum gap. Alternatively, in response to the second transition time of the terminal being greater than the minimum gap, the terminal determines the start moment of the random access search space for monitoring the PDCCH based on the non-first random access search space following the minimum gap. The PDCCH is received to determine a random access response.

As an example, the second performance condition of the terminal may be that the terminal type is a second type of terminal. In response to the terminal being the second type of terminal and the second transition time being greater than the minimum gap, the terminal determines the start moment of the random access search space for monitoring the PDCCH based on a part of the random access search space of the first random access search space following the minimum gap. Alternatively, in response to the second transition time of the terminal being greater than the minimum gap, the terminal determines the start moment of the random access search space for monitoring the PDCCH based on the non-first random access search space following the minimum gap. Further, the PDCCH is received to determine a random access response.

FIG. 10 is a flowchart illustrating a method for monitoring a search space according to an exemplary embodiment. As shown in FIG. 10, the method for monitoring a search space is executed by the terminal and includes the following steps.

At S71, a first random access response search space corresponding to a first random access search space following the minimum gap is determined.

At S72, a random access response window is determined based on a start moment of a first random access response search space as a reference moment.

In the embodiment of the present disclosure, the terminal determines the first random access response search space corresponding to the first random access search space following the minimum gap. The random access response window is determined and starts from the start moment of the random access response search space corresponding to the first random access search space.

In the embodiment of the present disclosure, the first performance condition and the second performance condition include at least one of: a terminal type; or center frequencies of a UL resource and a DL resource of the terminal.

The terminal type may include a first type of terminal and a second type of terminal. The performance conditions for the center frequencies of the LTL resource and the DL resource of the terminal may be that the center frequency of the UL resource is the same as or different from that of the DL resource.

Based on the same concept, the embodiments of the present disclosure also provide an apparatus for monitoring a search space.

FIG. 11 is a flowchart illustrating a method for monitoring a search space according to an exemplary embodiment. As shown in FIG. 11, the method for monitoring a search space is executed by a network device and includes the following steps.

At S81, a minimum gap is determined.

In the embodiment of the present disclosure, the minimum gap configuration may include one or more minimum gaps. The minimum gap is a gap between a terminal sending a PRACH resource and a random access search space monitored by the terminal.

At S82, a random access search space for sending a PDCCH is determined based on the minimum gap.

In the embodiment of the present disclosure, the network device determines one or more minimum gaps, and further determines a minimum gap including UL transition time and DL transition time of the terminal. After the determined minimum gap, the random access search space is monitored, and the PDCCH is sent based on the random access search space. The sent PDCCH includes a random access response.

In some embodiments of the present disclosure, the network device may configure a plurality of minimum gaps for the terminal, and the terminal may determine a corresponding minimum gap according to its own performance conditions. The performance conditions of the terminal may include a first performance condition and a second performance condition. The plurality of minimum gaps may include two minimum gaps, i.e., a first minimum gap and a second minimum gap. The first minimum gap and the second minimum gap may be determined based on a communication protocol.

In some embodiments of the present disclosure, the first minimum gap corresponds to the first performance condition of the terminal, and the second minimum gap corresponds to the second performance condition of the terminal. The terminal capability corresponding to the first performance condition is greater than the terminal capability corresponding to the second performance condition. The first minimum gap is less than the second minimum gap.

FIG. 12 is a flowchart illustrating a method for monitoring a search space according to an exemplary embodiment. As shown in FIG. 12, the method for monitoring a search space is executed by a network device and includes the following steps.

At S91, in response to the terminal meeting the first performance condition, the PDCCH is sent based on a random access search space following the first minimum gap.

In the embodiment of the present disclosure, as described in the above embodiment, the first performance condition of the terminal corresponds to the first minimum gap. If the terminal meets the first performance condition, the random access search space following the first minimum gap is monitored.

As an example, the terminal meeting the first performance condition may be that the center frequency of the UL resource used by the terminal may be the same as that of the DL resource monitored by the terminal. In response to the center frequency of the UL resource used by the terminal being the same as that of the DL resource monitored by the terminal, it is determined to monitor a random access search space following the first minimum gap, and the PDCCH is further received.

As an example, the terminal meeting the first performance condition may be that a terminal type may be a first type of terminal. In response to the terminal being the first type of terminal, it is determined to monitor a random access search space following the first minimum gap, and the PDCCH is further received and monitored. The first type of terminal may be a normal terminal with a relatively high communication capability.

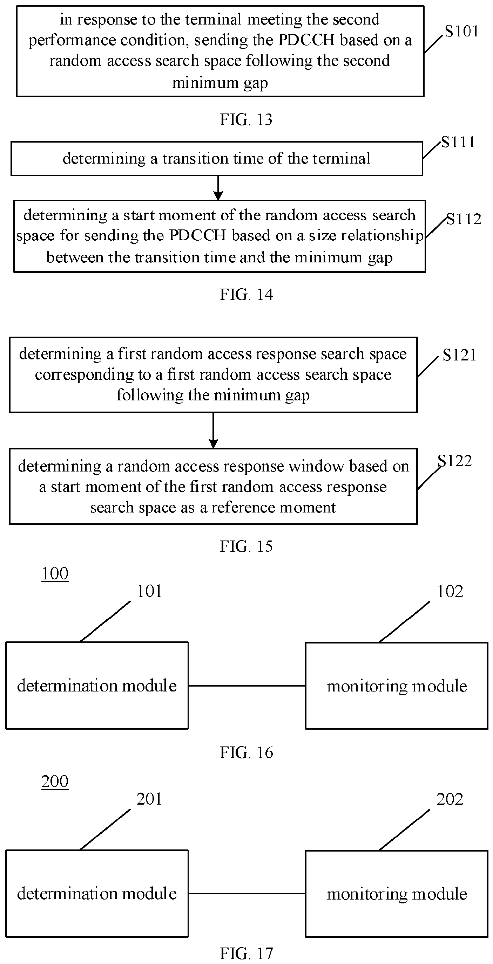

FIG. 13 is a flowchart illustrating a method for monitoring a search space according to an exemplary embodiment. As shown in FIG. 13, the method for monitoring a search space is executed by a network device and includes the following steps.

At S 101, in response to the terminal meeting the second performance condition, the PDCCH is sent based on the random access search space following the second minimum gap.

In some embodiments of the present disclosure, as described in the above embodiments, the second performance condition of the terminal corresponds to the second minimum gap. If the terminal meets the second performance condition, the random access search space following the second minimum gap is monitored, and the PDCCH is further received and monitored.

As an example, the terminal meeting the second performance condition may be that the center frequency of the UL resource used by the terminal is different from that of the DL resource monitored by the terminal. In response to the center frequency of the UL resource used by the terminal being different from that of the DL resource monitored by the terminal, it is determined to monitor the first random access search space following the second minimum gap, and the PDCCH is further received.

As an example, the terminal meeting the first performance condition may be that the terminal type may be a first type of terminal. In response to the terminal being the first type of terminal, it is determined to monitor the first random access search space following the second minimum gap, and the PDCCH is further received. The first type of terminal may be a normal terminal with a relatively high communication capability.

In an embodiment of the present disclosure, in response to the minimum gap including a plurality of minimum gaps, for example, the plurality of minimum gaps include a first minimum gap and a second minimum gap, the network device determines to send the PDCCH of scheduling a random access response in the random access search space following the first minimum gap or the second minimum gap.

In some embodiments of the present disclosure, the minimum gap may also include one minimum gap. The minimum gap is a gap between a resource for sending a PRACH by all terminals and the random access search space monitored by the terminals. The minimum gap may be determined based on a communication protocol.

FIG. 14 is a flowchart illustrating a method for monitoring a search space according to an exemplary embodiment. As shown in FIG. 14, the method for monitoring a search space is executed by a network device and includes the following steps.

At S111, a transition time of the terminal is determined.

In the embodiment of the present disclosure, the terminal determines transition times for the terminal to perform UL and DL according to its own performance conditions. The performance conditions of the terminal include a first performance condition and a second performance condition.

At S 112, a start moment of the random access search space for sending the PDCCH is determined based on a size relationship between the transition time and the minimum gap.

In the embodiment of the present disclosure, the network device sends the PDCCH for scheduling the random access response in the random access space following the minimum gap. The terminal may compare the determined transition time with the minimum gap determined according to the communication protocol. It is determined that the start moment of the random access search space for monitoring the PDCCH.

In some embodiments of the present disclosure, the terminal compares the determined transition time with the minimum gap determined according to the communication protocol. Determining the start moment of the random access search space for monitoring the PDCCH, the following methods may be used.

In response to the transition time of the terminal being greater than the minimum gap, the start moment of the random access search space for monitoring the PDCCH is determined based on the earliest appearing part of the random access search space. Alternatively, in response to the transition time of the terminal being greater than the minimum gap, the start moment of the random access search space for monitoring the PDCCH is determined based on the next random access search space of the earliest appearing random access search space. In response to the transition time of the terminal being less than or equal to the minimum gap, the start moment of the random access search space for monitoring the PDCCH is determined based on the earliest appearing random access search space.

In some embodiments of the present disclosure, the transition times for the terminal to perform UL and DL may include a plurality of transition times. The plurality of transition times may include a first transition time and a second transition time.

In some embodiments of the present disclosure, the first transition time corresponds to the first performance condition of the terminal, and the second transition time corresponds to the second performance condition of the terminal. The terminal capability corresponding to the first performance condition is greater than the terminal capability corresponding to the second performance condition. The first transition time is smaller than the second transition time.

In the embodiment of the present disclosure, as described in the above embodiment, the first performance condition of the terminal corresponds to the first transition time. In response to the first transition time of the terminal being greater than the minimum gap, the terminal determines the start moment of the random access search space for monitoring the PDCCH based on a part of the first random access search space following the minimum gap. Alternatively, in response to the first transition time of the terminal being greater than the minimum gap, the network device determines the start moment of the random access search space for monitoring the PDCCH based on the non-first random access search space following the minimum gap. Further, the terminal receives the PDCCH in the monitored random access search space, so as to determine a random access response. In other words, in response to the first transition time of the terminal being greater than the minimum gap, it is determined to give up monitoring the earliest random access search space following the minimum gap. Alternatively, in response to the first transition time of the terminal being greater than the minimum gap, it is determined to give up monitoring a part of the earliest random access search space following the minimum gap.

As an example, the first performance condition of the terminal may be that the center frequency of the UL resource used by the terminal is the same as that of the DL resource monitored by the terminal. If the center frequency of the UL resource used by the terminal is the same as that of the DL resource monitored by the terminal, and the first transition time is greater than the minimum gap, the terminal determines the start moment of the random access search space for monitoring the PDCCH based on a part of the first random access search space following the minimum gap. Alternatively, in response to the first transition time of the terminal being greater than the minimum gap, the terminal determines the start moment of the random access search space for monitoring the PDCCH based on the non-first random access search space following the minimum gap. Further, the PDCCH is received to determine the random access response.

As an example, the first performance condition of the terminal may be that the terminal type is a first type of terminal. In response to the terminal being the first type of terminal and the first transition time being greater than the minimum gap, the terminal determines the start moment of the random access search space for monitoring the PDCCH based on a part of the first random access search space following the minimum gap. Alternatively, in response to the first transition time of the terminal being greater than the minimum gap, the terminal determines the start moment of the random access search space for monitoring the PDCCH based on the non-first random access search space following the minimum gap. The PDCCH is received to determine a random access response.

In the embodiment of the present disclosure, as described in the above embodiment, the second performance condition of the terminal corresponds to the second transition time. In response to the second transition time of the terminal being greater than the minimum gap, the terminal determines the start moment of the random access search space for monitoring the PDCCH based on a part of the first random access search space following the minimum gap. Alternatively, in response to the second transition time of the terminal being greater than the minimum gap, the terminal determines the start moment of the random access search space for monitoring the PDCCH based on the non-first random access search space following the minimum gap. The PDCCH is received in the monitored random access search space to determine a random access response. In other words, in response to the second transition time of the terminal being greater than the minimum gap, it is determined to give up monitoring the earliest random access search space following the minimum gap. Alternatively, in response to the second transition time of the terminal being greater than the minimum gap, it is determined to give up monitoring a part of the earliest random access search space following the minimum gap.

As an example, the second performance condition of the terminal may be that the center frequency of the UL resource used by the terminal is the same as that of the DL resource monitored by the terminal. If the center frequency of the UL resource used by the terminal is the same as that of the DL resource monitored by the terminal, and the second transition time is greater than the minimum gap, the terminal determines the start moment of the random access search space for monitoring the PDCCH based on a part of the first random access search space following the minimum gap. Alternatively, in response to the second transition time of the terminal being greater than the minimum gap, the terminal determines the start moment of the random access search space for monitoring the PDCCH based on the non-first random access search space following the minimum gap. The PDCCH is received to determine a random access response.

As an example, the second performance condition of the terminal may be that the terminal type is a second type of terminal. In response to the terminal being the second type of terminal and the second transition time being greater than the minimum gap, the terminal determines the start moment of the random access search space for monitoring the PDCCH based on a part of the random access search space of the first random access search space following the minimum gap. Alternatively, in response to the second transition time of the terminal being greater than the minimum gap, the terminal determines the start moment of the random access search space for monitoring the PDCCH based on the non-first random access search space following the minimum gap. Further, the PDCCH is received to determine a random access response.

FIG. 15 is a flowchart illustrating a method for monitoring a search space according to an exemplary embodiment. As shown in FIG. 10, the method for monitoring a search space is executed by a network device and includes the following steps.

At S121, a first random access response search space corresponding a first random access search space following the minimum gap is determined.

At S 122, a random access response window is determined based on a start moment of a first random access response search space as a reference moment.

In the embodiment of the present disclosure, the terminal determines the first random access response search space corresponding to the first random access search space following the minimum gap. The random access response window is further determined and starts from the start moment of the random access response search space corresponding to the first random access search space.

In the embodiment of the present disclosure, the first performance condition and the second performance condition include at least one of: a terminal type; or center frequencies of a UL resource and a DL resource of the terminal.

The terminal type may include a first type of terminal and a second type of terminal. The performance conditions for the center frequencies of the LTL resource and the DL resource of the terminal may be that the center frequency of the UL resource is the same as or different from that of the DL resource.

Based on the same concept, the embodiments of the present disclosure also provide an apparatus for monitoring a search space.

It may be understood that, in order to implement the above functions, the apparatus for monitoring a search space according to the embodiments of the present disclosure includes hardware structures and/or software modules for performing each function. Combined with the units and algorithm steps of each example disclosed in the embodiments of the present disclosure, the embodiments of the present disclosure may be implemented in the form of hardware or a combination of hardware and computer software. Whether a function is performed by hardware or computer software driving the hardware depends on a specific application and design constraints of the technical solution. Those skilled in the art may use different methods to implement the described functions for each specific application, but such implementation should not be considered to go beyond the scope of the technical solutions in the embodiments of the present disclosure.

FIG. 16 is a block diagram illustrating an apparatus for monitoring a search space according to an exemplary embodiment. Referring to FIG. 16, the apparatus 100 for monitoring a search space includes a determination module 101 and a monitoring module 102 .

The determination module 101 is configured to determine a minimum gap, in which the minimum gap is a gap between a resource for sending a physical random access channel (PRACH) and a random access search space monitored. The monitoring module 102 is configured to determine the random access search space for monitoring a physical downlink control channel (PDCCH) based on the minimum gap.

In this embodiment of the present disclosure, the minimum gap includes a plurality of minimum gaps, and the plurality of minimum gaps includes a first minimum gap and a second minimum gap. The first minimum gap corresponds to a first performance condition of the terminal, and the second minimum gap corresponds to a second performance condition of the terminal. The terminal capability corresponding to the first performance condition is greater than the terminal capability corresponding to the second performance condition. The first minimum gap is less than the second minimum gap.

In this embodiment of the present disclosure, the monitoring module 102 is configured to in response to the terminal meeting the first performance condition, monitor a random access search space following the first minimum gap; or in response to the terminal meeting the second performance condition, monitor a random access search space following the second minimum gap.

In the embodiment of the present disclosure, the minimum gap includes one minimum gap configured. The monitoring module 102 is configured to: determine a transition time of the terminal; and determine a start moment of the random access search space for monitoring the PDCCH based on a size relationship between the transition time and the minimum gap.

In the embodiment of the present disclosure, the transition time includes a first transition time and a second transition time. The first transition time corresponds to a first performance condition of the terminal, and the second transition time corresponds to a second performance condition of the terminal. The terminal capability corresponding to the first performance condition is greater than the terminal capability corresponding to the second performance condition. The first transition time is less than the second transition time.

In the embodiment of the present disclosure, the monitoring module 102 is configured to in response to the terminal meeting the first performance condition, determine the start moment of the random access search space for monitoring the PDCCH based on a part of a first random access search space following the minimum gap or a non-first random access search space following the minimum gap, in which the first transition time is greater than the minimum gap.

In the embodiment of the present disclosure, the monitoring module 102 is configured to in response to the terminal meeting the second performance condition, and the second transition time being greater than the minimum gap, determine the start moment of the random access search space for monitoring the PDCCH based on a part of a first random access search space following the minimum gap or a non-first random access search space following the minimum gap, in which the second transition time is greater than the minimum gap.

In the embodiment of the present disclosure, the determination module 101 is also configured to: determine a first random access response search space corresponding to a first random access search space following the minimum gap; and determine a random access response window based on a start moment of a first random access response search space as a reference moment.

In the embodiment of the present disclosure, the first performance condition or the second performance condition includes at least one of: a terminal type; or center frequencies of a UL resource and a DL resource of the terminal.

FIG. 17 is a block diagram illustrating an apparatus for monitoring a search space according to an exemplary embodiment. Referring to FIG. 17, the apparatus 200 for monitoring a search space includes a determination module 201 and a sending module 202 .

The determination module 201 is configured to determine a minimum gap, in which the minimum gap is a gap between a resource for sending a physical random access channel (PRACH) and a random access search space monitored. The sending module 202 is configured to determine the random access search space for sending a physical downlink control channel (PDCCH) based on the minimum gap.

In this embodiment of the present disclosure, the minimum gap includes a plurality of minimum gaps, and the plurality of minimum gaps include a first minimum gap and a second minimum gap. The first minimum gap corresponds to a first performance condition of a terminal, and the second minimum gap corresponds to a second performance condition of the terminal. A terminal capability corresponding to the first performance condition is greater than a terminal capability corresponding to the second performance condition. The first minimum gap is less than the second minimum interval.

In the embodiment of the present disclosure, the sending module 202 is configured to in response to the terminal meeting the first performance condition, send the PDCCH based on a random access search space following the first minimum gap; or in response to the terminal meeting the second performance condition, send the PDCCH based on a random access search space following the second minimum gap.

In the embodiment of the present disclosure, the minimum gap includes one minimum gap. The sending module 202 is configured to determine a transition time of the terminal; and determine a start moment of the random access search space for sending the PDCCH based on a size relationship between the transition time and the minimum gap.

In the embodiment of the present disclosure, the transition time includes a first transition time and a second transition time. The first transition time corresponds to a first performance condition of the terminal, and the second transition time corresponds to a second performance condition of the terminal. A terminal capability corresponding to the first performance condition is greater than the terminal capability corresponding to the second performance condition. The first transition time is less than the second transition time.

In the embodiment of the present disclosure, the determination module 201 is also configured to determine a first random access response search space corresponding to a first random access search space following the minimum gap; and determine a random access response window based on a start moment of the first random access response search space as a reference moment.

In the embodiment of the present disclosure, the first performance condition and the second performance condition include at least one of: a terminal type; or center frequencies of a UL resource and a DL resource of the terminal.

Regarding the apparatuses in the above embodiments, the specific manners in which each module performs operations have been described in detail in the embodiments related to the methods, which will not be described in detail here.

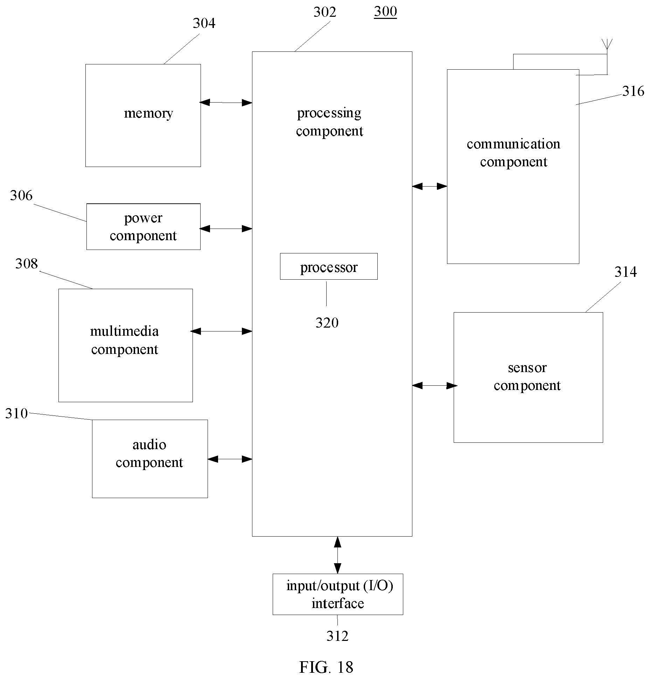

FIG. 18 is a block diagram of a device 300 for monitoring a search space according to an exemplary embodiment. For example, the device 300 may be a mobile phone, a computer, a digital broadcast terminal, a messaging device, a game console, a tablet device, a medical device, a fitness device, a personal digital assistant, or the like.

Referring to FIG. 18, the device 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls the overall operations of device 300, such as operations associated with a display, phone calls, data communications, camera operations, and recording operations. The processing component 302 may include one or more processors 320 to execute instructions to complete all or part of the steps of the above method. Additionally, processing component 302 may include one or more modules that facilitate interactions between the processing component 302 and other components. For example, the processing component 302 may include a multimedia module to facilitate interactions between the multimedia component 308 and the processing component 302.

The memory 304 is configured to store various types of data to support operations at the device 300. Examples of such data include instructions for any application or method operating on the device 300, contact data, phonebook data, messages, pictures, videos, etc. The memory 304 may be implemented by any type of volatile or non-volatile storage device, or their combination, such as a static random access memory (SRAM), an electrically erasable programmable read-only memory (EEPROM), an erasable programmable read-only memory (EEPROM), a programmable read-only memory (PROM), a read-only memory (ROM), a magnetic memory, a flash memory, a magnetic or optical disk.

The power component 306 provides powers to various components of the device 300. The power components 306 may include a power management system, one or more power supplies, and other components associated with generating, managing, and distributing powers to the device 300.

The multimedia component 308 includes a screen that provides an output interface between the device 300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense a boundary of a touch or slide action, but also detect a duration and pressure associated with the touch or slide action. In some embodiments, the multimedia component 308 includes a front-facing camera and/or a rear-facing camera. When the device 300 is in an operating mode, such as a shooting mode or a video mode, the front camera and/or the rear camera may receive external multimedia data. Each of the front camera and rear camera may be a fixed optical lens system or have a focal length and optical zoom capabilities.

The audio component 310 is configured to output and/or input audio signals. For example, the audio component 310 includes a microphone (MIC) configured to receive external audio signals when the device 300 is in the operating mode, such as a call mode, a recording mode, and a voice recognition mode. The received audio signals may be further stored in the memory 304 or sent via the communication component 316. In some embodiments, the audio component 310 also includes a speaker for outputting audio signals.

The I/O interface 312 provides an interface between the processing component 302 and a peripheral interface module. The peripheral interface module may be a keyboard, a click wheel, a button, etc. These buttons may include, but are not limited to: a home button, volume buttons, a start button, and a lock button.

The sensor component 314 includes one or more sensors for providing various aspects of status assessment for the device 300. For example, the sensor component 314 may detect an open/closed state of the device 300, a relative positioning of components, such as the display and keypad of the device 300, and the sensor component 314 may also detect a change in position of the device 300 or a component of the device 300, a presence or absence of user contacts with the device 300, an orientation of the device 300, or an acceleration/deceleration and a temperature changes of the device 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may also include an acceleration sensor, a gyroscope sensor, a magnetic sensor, a pressure sensor, or a temperature sensor.

The communication component 316 is configured to facilitate wired or wireless communication between the device 300 and other devices. The device 300 may access a wireless network based on a communication standard, such as WiFi, 2G or 3G, or their combination. In an exemplary embodiment, the communication component 316 receives broadcast signals or broadcast related information from an external broadcast management system via a broadcast channel. In an exemplary embodiment, the communication component 316 also includes a near field communication (NFC) module to facilitate short-range communications. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the device 300 may be configured by one or more application specific integrated circuits (ASICs), digital signal processors (DSPs), digital signal processing devices (DSPDs), programmable logic devices (PLDs), field programmable Gate arrays (FPGA), controllers, microcontrollers, microprocessors or other electronic components are implemented for executing the above method.

In an exemplary embodiment, a non-transitory computer-readable storage medium including instructions is also provided, such as the memory 304 including instructions which may be executed by the processor 320 of the device 300 to complete the above method. For example, the non-transitory computer-readable storage medium may be an ROM, a random access memory (RAM), a CD-ROM, a magnetic tape, a floppy disk, an optical data storage device, etc.

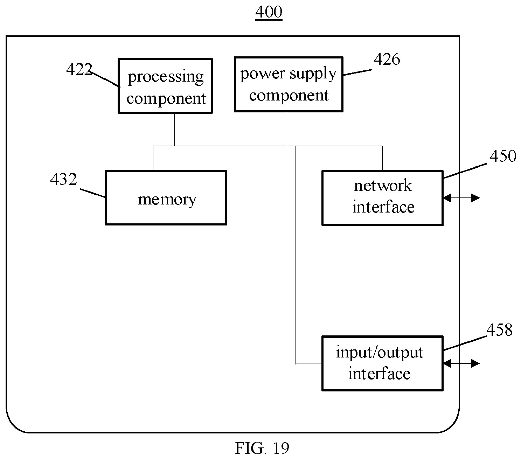

FIG. 19 is a block diagram illustrating a device 400 for use according to an exemplary embodiment. For example, the device 400 may be provided as a server. Referring to FIG. 19, the device 400 includes a processing component 422, which further includes one or more processors, and memory resources represented by a memory 432 for storing instructions, such as application programs, executable by the processing component 422. The application programs stored in the memory 432 may include one or more modules, each corresponding to a set of instructions. Furthermore, the processing component 422 is configured to execute instructions to perform the above-described method.

The device 400 may also include a power supply component 426 configured to perform power management of the device 400, a wired or wireless network interface 450 configured to connect the device 400 to a network, and an input/output (I/O) interface 458. The device 400 may operate based on an operating system stored in the memory 432, such as Windows Server^{™}, Mac OS X^{™}, Unix^{™}, Linux^{™}, FreeBSD^{™} or the like.

It may be further understood that "a plurality of" in this disclosure refers to two or more, and other quantifiers are similar. "And/or" describes a relationship between related objects, indicating that there may be three relationships, for example, A and/or B may mean: A exists alone, A and B exist simultaneously, and B exists alone. The character "/" generally indicates that the related objects are in an "or" relationship. The singular forms "a/an", "said" and "the" are intended to include the plural forms as well, unless the context clearly indicates otherwise.

It may be further understood that the terms "first", "second", etc. are used to describe various information, but such information should not be limited to these terms. These terms are only used to distinguish information of the same type from each other and do not imply a specific order or importance. In fact, the expressions such as "first" and "second" may be used interchangeably. For example, without departing from the scope of the present disclosure, the first information may also be called second information, and similarly, second information may also be called first information.

It may be further understood that although the operations are described in a specific order in the drawings in the embodiments of the present disclosure, this should not be understood as requiring that these operations be performed in the specific order shown or in a serial order, or requiring to perform all operations shown to obtain desired results. In certain circumstances, multitasking and parallel processing may be advantageous.

Other embodiments of the disclosure may be readily apparent to those skilled in the art from consideration of the specification and practice of the invention disclosed herein. This disclosure is intended to cover any variations, uses, or adaptations of the disclosure that follow the general principles of the disclosure and include common knowledge or conventional technical means in the technical field that are not disclosed in the disclosure. It is intended that the specification and examples be considered as exemplary only, with a true scope and spirit of the disclosure being indicated by the following claims.

It should be understood that, the present disclosure is not limited to the precise structures described above and illustrated in the accompanying drawings, and various modifications and changes may be made without departing from the scope thereof. The scope of the disclosure is limited only by the appended claims.

## Claims

1. A method for monitoring a search space, performed by a terminal, the method comprising:
determining a minimum gap, wherein the minimum gap is a gap between a resource for sending a physical random access channel (PRACH) and a random access search space monitored; and
determining a random access search space for monitoring a physical downlink control channel (PDCCH) based on the minimum gap.

2. The method according to claim 1, wherein the minimum gap comprises a plurality of minimum gaps, and the plurality of minimum gaps comprise a first minimum gap and a second minimum gap;
the first minimum gap corresponds to a first performance condition of the terminal, and the second minimum gap corresponds to a second performance condition of the terminal;
wherein a terminal capability corresponding to the first performance condition is greater than a terminal capability corresponding to the second performance condition; and
the first minimum gap is less than the second minimum gap.

3. The method according to claim 2, wherein determining the random access search space for monitoring the PDCCH based on the minimum gap comprises:
in response to the terminal meeting the first performance condition, monitoring a random access search space following the first minimum gap; or
in response to the terminal meeting the second performance condition, monitoring a random access search space following the second minimum gap.

4. The method according to claim 1, wherein the minimum gap comprises one minimum gap configured; and
determining the random access search space for monitoring the PDCCH based on the minimum gap comprises:
determining a transition time of the terminal; and
determining a start moment of the random access search space for monitoring the PDCCH based on a size relationship between the transition time and the minimum gap.

5. The method according to claim 4, wherein the transition time comprises a first transition time and a second transition time;
the first transition time corresponds to a first performance condition of the terminal, and the second transition time corresponds to a second performance condition of the terminal;
wherein a terminal capability corresponding to the first performance condition is greater than a terminal capability corresponding to the second performance condition; and
the first transition time is less than the second transition time.

6. The method according to claim 5, wherein determining the start moment of the random access search space for monitoring the PDCCH based on the size relationship between the transition time and the minimum gap comprises:
in response to the terminal meeting the first performance condition, determining the start moment of the random access search space for monitoring the PDCCH based on a part of a first random access search space following the minimum gap or a non-first random access search space following the minimum gap; wherein the first transition time is greater than the minimum gap.

7. The method according to claim 5, wherein determining the start moment of the random access search space for monitoring the PDCCH based on the size relationship between the transition time and the minimum gap comprises:
in response to the terminal meeting the second performance condition, and the second transition time being greater than the minimum gap, determining the start moment of the random access search space for monitoring the PDCCH based on a part of a first random access search space following the minimum gap or a non-first random access search space following the minimum gap; and
wherein the second transition time is greater than the minimum gap.

8. The method according to any one of claims 1 to 7, further comprising:
determining a first random access response search space corresponding to a first random access search space following the minimum gap; and
determining a random access response window based on a start moment of the first random access response search space as a reference moment.

9. The method according to claim 2 or 5, wherein the first performance condition or the second performance condition comprises at least one of:
a terminal type; or
center frequencies of an uplink resource and a downlink resource of the terminal.

10. A method for monitoring a search space, performed by a network device, the method comprising:
determining a minimum gap, wherein the minimum gap is a gap between a resource for sending by a terminal a physical random access channel (PRACH) and a random access search space monitored by the terminal; and
determining a random access search space for sending a physical downlink control channel (PDCCH) based on the minimum gap.

11. The method according to claim 10, wherein the minimum gap comprises a plurality of minimum gaps, and the plurality of minimum gaps comprise a first minimum gap and a second minimum gap;
the first minimum gap corresponds to a first performance condition of the terminal, and the second minimum gap corresponds to a second performance condition of the terminal;
wherein a terminal capability corresponding to the first performance condition is greater than a terminal capability corresponding to the second performance condition; and
the first minimum gap is less than the second minimum gap.

12. The method according to claim 11, wherein determining the random access search space for sending the PDCCH based on the minimum gap comprises:
in response to the terminal meeting the first performance condition, sending the PDCCH based on a random access search space following the first minimum gap; or
in response to the terminal meeting the second performance condition, sending the PDCCH based on a random access search space following the second minimum gap.

13. The method according to claim 10, wherein the minimum gap comprises one minimum gap; and
determining the random access search space for sending the PDCCH based on the minimum gap comprises:
determining a transition time of the terminal; and
determining a start moment of the random access search space for sending the PDCCH based on a size relationship between the transition time and the minimum gap.

14. The method according to claim 13, wherein the transition time comprises a first transition time and a second transition time;
the first transition time corresponds to a first performance condition of the terminal, and the second transition time corresponds to a second performance condition of the terminal;
wherein a terminal capability corresponding to the first performance condition is greater than a terminal capability corresponding to the second performance condition; and
the first transition time is less than the second transition time.

15. The method according to any one of claims 10 to 14, further comprising:
determining a first random access response search space corresponding to a first random access search space following the minimum gap; and
determining a random access response window based on a start moment of the first random access response search space as a reference moment.

16. The method according to claim 11 or 14, wherein the first performance condition or the second performance condition comprises at least one of:
a terminal type; or
center frequencies of an uplink resource and a downlink resource of the terminal.

17. An apparatus for monitoring a search space, comprising:
a determination module, configured to determine a minimum gap, wherein the minimum gap is a gap between a resource for sending a physical random access channel (PRACH) and a random access search space monitored; and
a monitoring module, configured to determine the random access search space for monitoring a physical downlink control channel (PDCCH) based on the minimum gap.

18. An apparatus for monitoring a search space, comprising:
a determination module, configured to determine a minimum gap, wherein the minimum gap is a gap between a resource for sending by a terminal a physical random access channel (PRACH) and a random access search space monitored by the terminal; and
a monitoring module, configured to determine the random access search space for sending a physical downlink control channel (PDCCH) based on the minimum gap.

19. A communication device, comprising a processor, and a memory for storing computer programs, wherein when the computer programs are executed by the processor, the communication device is caused to perform method according to any one of claims 1 to 9.

20. A communication device, comprising a processor, and a memory for storing computer programs, wherein when the computer programs are executed by the processor, the communication device is caused to perform method according to any one of claims 10 to 16.

21. A computer-readable storage medium having instructions stored thereon, wherein when the instructions are executed, the method according to any one of claims 1 to 9 is implemented.

22. A computer-readable storage medium storing instructions, wherein when the instructions are executed, the method according to any one of claims 1 to 9 is implemented.
